# EUROPEAN PATENT SPECIFICATION

(11) **EP 3 031 625 B1**
(45) Date of publication and mention of the grant of the patent: **14.11.2018**
(21) Application number: 15200034.5
(22) Date of filing: 11.07.2012
(51) Int. Cl.: B60C 11/03, B60C 11/04, B60C 11/12

(54) **TREAD FOR A PNEUMATIC TIRE**
LAUFFLÄCHE FÜR EINEN LUFTREIFEN
CHAPE POUR PNEU DE VÉHICULE

(30) Priority: 14.07.2011 US 201113182788
(43) Date of publication of application: 15.06.2016
(62) Divisional of application: 12175858.5
(73) Proprietor: The Goodyear Tire & Rubber Company, Akron, Ohio 44316 (US)
(72) Inventor: GEORGES, Francois Pierre Charles, B-4970 Stavelot (BE); WINKIN, Didier, B-6600 Bastogne (BE); BRAUN, Lothar Claus, D-54669 Bollendorf (DE); SEVERENS, Frank, B-6700 Frassem-Arlon (BE); GEORGES, Claude, L-1742 Luxembourg (LU); SCHEUREN, Daniel, B-6700 Arlon (BE); MATHONET, Vincent Benoit, B-4920 Harze (BE)
(74) Representative: Kutsch, Bernd

(56) References cited:
- EP-A1- 0 659 594
- EP-A2- 2 191 984
- JP-A- 2001 063 323

## Description

### Technical Field

The present invention relates to a pneumatic tire, and more particularly, to a tread for a pneumatic tire.

### Background Art

Pneumatic truck tires constructed for slippery or even winter driving conditions are intended to be suitable for running on surfaces of reduced compactness such as snow-covered roadways. Such tires are required to demonstrate suitable traction (gripping), power, braking, and handling characteristics on wet or snow covered surfaces while maintaining rolling resistance and mileage performance. The tread pattern of commercial truck tires must accordingly meet such competing objectives in order to provide the user with acceptable tire performance.

With the continuing rise in popularity of light trucks and cargo vans, there exists a need to provide tires that have the ability to be driven on paved roads while carrying heavy loads without excessive noise, yet also to be capable of being driven in heavy snow or wet roads. Often these tires will be driven in flooded or wet roadway conditions. As an added condition, these multipurpose traction demands for the tire should be coupled with excellent tread wear.

Historically, tires have been able to meet one or two of the above-referenced performance requirements, but usually at the sacrifice of other design performance features. Snow tires for cargo vans may achieve good traction usually by opening the tread pattern and providing large block type tread elements. However, these tires have been noisy with poor treadwear when driven at highway speeds on paved roads.

A conventional asymmetric nondirectional tire has employed a unique triple traction feature that provides excellent uniform wear across the tread pattern regardless of the wheel position. The tire may have adequate noise and traction characteristics in a variety of conditions, such as snow, off road, on road wet, and on road dry. Another conventional tire has demonstrated a superior wet traction tire by employing two wide aquachannels in combination with the triple traction feature. This tire has demonstrated enhanced deep-water traction without sacrifice of wear and other performance features. While the all around performance of these conventional light truck and sport utility tires should be good, some drivers may have specific needs or concerns requiring a more specialized tire performance in one or more performance features.

Commercial tires should exhibit excellent treadwear and low tire noise on paved roads. The conventional tread for such a vehicle may be a circumferentially ribbed tread. Such a tread may be inherently less noisy than other treads. Lateral grooves may be limited, since lateral grooves may accelerate treadwear. Voids, such as grooves, may provide traction, but a consequential loss of treadwear may result because the net-road contacting area of the tread is reduced by the use of grooves. Further, lateral grooves may create an entry/exit point into/out of the contact patch of the tread thereby initiating additional heel/toe wear.

There is thus a desire to increase traction performance of these ribbed treads without sacrificing treadwear or noise performance of the ribbed treads. While these treads wear generally well, irregular wear along the edges of the circumferentially continuous grooves may occur. There has been a trade-off in attempting to increase the aggressive wet road and snow traction performance of these tires while maintaining the treadwear durability and noise constraints.

The present invention seeks to provide a novel tread that is both quiet and long wearing, while also achieving excellent road traction and rolling resistance. The tread is in particular suitable for radial truck tires or long-haul radial truck tires.

JP-A-2001-63323 describes a tire tread in accordance with the preamble of claim 1.

### Summary of the Invention

The invention relates to a tread in accordance with claim 1 and to a tire in accordance with claim 15.

Dependent claims refer to preferred embodiments of the invention.

In one aspect of the invention, the first and/or second circumferentially continuous grooves may have a 7.6 mm radial depth or a radial depth in a range of from 6.5 to 8.5 mm.

In one aspect of the invention, the circumferentially continuous center groove may have a 13.6 mm radial depth or a radial depth in a range of from 11 mm to 15 mm.

In one aspect of the invention, at least one or both of the circumferentially extending first and second shoulder grooves may have a 13.6 mm radial depth or a radial depth in a range of from 11 mm to 15 mm.

In one aspect of the invention, the sipes of the first and/or second shoulder ribs may have a radial depth of 80 to 120 percent, preferably 100 percent or about 100 percent, of the radial depth of the first and second circumferentially continuous grooves.

In one aspect of the invention, the sipes of the central rib may have a radial depth of 80 to 120 percent, preferably 100 percent or about 100 percent, of the radial depth of the first and second circumferentially continuous grooves.

The width of the sipes changes continuously or in at least two steps towards the circumferentially continuous groove from a first, axially outer sipe width (axially outer with respect to the circumferentially continuous groove) to a second, axially inner sipe width (axially inner with respect to the circumferentially continuous groove), wherein the first sipe width is different from the second sipe width, and wherein the first sipe width is preferably larger such as at least two times larger than the second sipe width.

In one aspect of the invention, the tire comprising the tread in accordance with the invention may preferably comprise a pair of annular bead cores, a carcass extending around the bead cores to form a toroidal structure and a belt reinforcing structure radially outward of the carcass. The tread is a circumferentially extending tread radially outward of the belt reinforcing structure.

In one aspect of the invention, the tire may be a truck tire or a radial truck tire.

In one aspect of the invention, the tread of the tire may have a smooth tread surface without sipes and without the first and second circumferentially continuous grooves but with the circumferentially extending center groove and optionally with one or both of the circumferentially extending first and second shoulder grooves once the tread is more than 7.6 mm worn, alternatively when the tread is more than 6 mm or more than 8 mm worn.

In one aspect of the invention, the sipes in the first circumferential row in the central rib and the sipes in the second circumferential row in the central rib may be circumferentially offset in a way that the sipes in the first row are not aligned with the sipes in the second row.

In one aspect of the invention, the first set of circumferentially spaced sipes in the shoulder ribs, if any, and the second set of circumferentially spaced sipes in the shoulder ribs, if any, may be circumferentially offset in a way that they do not end at the same location at the first circumferentially continuous groove or the second circumferentially continuous groove respectively.

In one aspect of the invention, the first set of circumferentially spaced sipes in the shoulder ribs, if any, and/or the second set of circumferentially spaced sipes in the shoulder ribs, if any, may be inclined in an opposite direction.

In one aspect of the invention, the first set of circumferentially spaced sipes in the first shoulder rib may connect the first circumferentially continuous groove and the circumferentially extending first shoulder groove.

In one aspect of the invention, the first set of circumferentially spaced sipes in the second shoulder rib may connect the second circumferentially continuous groove and the circumferentially extending second shoulder groove.

In one aspect of the invention, the second set of circumferentially spaced sipes in the second shoulder rib may extend from the circumferentially extending second shoulder groove axially outwards.

In one aspect of the invention, the second set of circumferentially spaced sipes in the first shoulder rib may extend from the circumferentially extending first shoulder groove axially outwards.

A tread for a pneumatic tire in accordance with a preferred aspect of the present invention may include a first circumferentially continuous groove, a second circumferentially continuous groove, a central rib interposed between the two circumferentially continuous grooves and extending continuously around a circumference of the tread, a first circumferentially extending shoulder rib disposed laterally outside of the first circumferentially continuous groove, and a second circumferentially extending shoulder rib disposed laterally outside of the second circumferentially continuous groove. The central rib has a plurality of circumferentially spaced sipes arranged in a first circumferential row and a second circumferential row. The sipes of the first row originate at the first circumferentially continuous groove and the sipes of the second row originate at the second circumferentially continuous groove. The sipes of both the first and second rows extend axially inward to a circumferentially extending and continuous variable center groove. The variable center groove has a minimum circumferentially extending opening at a radially outermost portion. As the tread wears and the radially outermost portion of the tread moves radially inward, the circumferentially extending opening of the variable center groove widens to a maximum circumferentially extending opening greater than the minimum circumferentially extending opening.

According to another aspect of the tread, the tread may further include a circumferentially extending and continuous variable first groove disposed in the first shoulder rib.

According to yet another aspect of the tread, the tread may further include a circumferentially extending and continuous variable second groove disposed in the second shoulder rib.

According to still another aspect of the tread, the first groove may have an axial width increasing from a surface of the first shoulder rib radially inward toward an axis of rotation of the tire.

According to yet another aspect of the tread, the second groove may have an axial width increasing from a surface of the second shoulder rib radially inward toward an axis of rotation of the tire.

According to still another aspect of the tread, the variable center groove may have an axial width increasing from a surface of the center rib radially inward toward an axis of rotation of the tire.

According to yet another aspect of the tread, the first rib may have a first set of circumferentially spaced sipes and a second set of circumferentially spaced sipes.

According to still another aspect of the tread, the second rib may have a first set of circumferentially spaced sipes and a second set of circumferentially spaced sipes.

According to yet another aspect of the tread, the first and second circumferentially continuous grooves may have a 7.6 mm radial depth.

According to still another aspect of the tread, the sipes of the first and second ribs may have a radial depth of 100 percent the radial depth of the first and second circumferentially continuous grooves.

### Brief Definitions of the Drawings

Fig. 1 is a schematic radial plan view of an example tread of a pneumatic tire in accordance with present invention.
Fig. 2 is a schematic cross-sectional view of the pneumatic tire of Fig. 1.
Fig. 3 is a schematic detailed radial plan view of the example tread of Fig. 1 under a first condition.
Fig. 4 is a schematic detailed radial plan view of the example tread of Fig. 1 under a second condition.

### Definitions

The following definitions are controlling for the present invention.

"Axial" and "axially" are used herein to refer to lines or directions that are parallel to the axis of rotation of the tire.

"Circumferential" means lines or directions extending along the perimeter of the surface of the annular tire parallel to the Equatorial Plane (EP) and perpendicular to the axial direction.

"Groove" means an elongated void area in a tread that may extend circumferentially or laterally about the tread in a straight, curved, or zigzag manner. Circumferentially and laterally extending grooves sometimes have common portions. The "groove width" may be the tread surface occupied by a groove or groove portion divided by the length of such groove or groove portion; thus, the groove width may be its average width over its length. Grooves may be of varying depths in a tire. The depth of a groove may vary around the circumference of the tread, or the depth of one groove may be constant but vary from the depth of another groove in the tire. As used herein, a groove is intended to have a width large enough to remain open in the tires contact patch or footprint.

"Radial" and "radially" are used to mean directions radially toward or away from the axis of rotation of the tire.

"Sipe" or "incision" means small slots molded into the tread elements of the tire that subdivide the tread surface and improve traction; sipes may be designed to close when within the contact patch or footprint, as distinguished from grooves.

### Detailed Description of an Example of the Present Invention

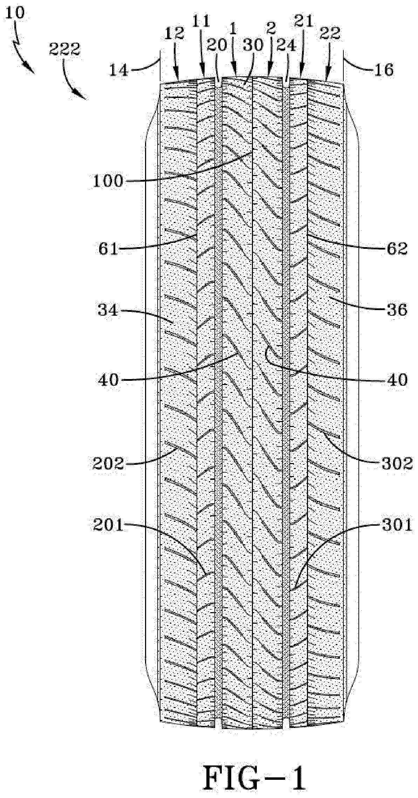

With the reference to Figs 1 through 4, a pneumatic tire 10 having a tread 222 according to one example of the present invention is shown. The tread 222 may have an axis of rotation R and first and second lateral edges 14, 16. The tread 222, when used with the pneumatic tire 10, may employ a tire having a carcass 70 with one or more plies 72 reinforced by radially extending synthetic or metal cords and a pair of substantially inextensible bead cores 74, an apex 76 radially above the bead cores 74, and a belt reinforcing structure 77 radially outward of the plies 72. The tire 10 may have an air impervious halobutyl liner 79 and a pair of rubber chafers 78.

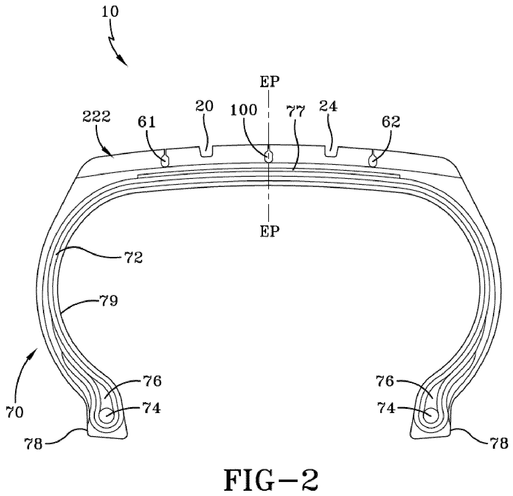

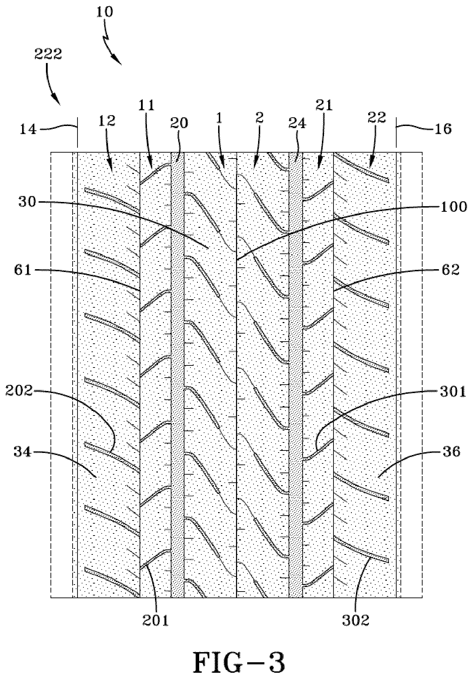

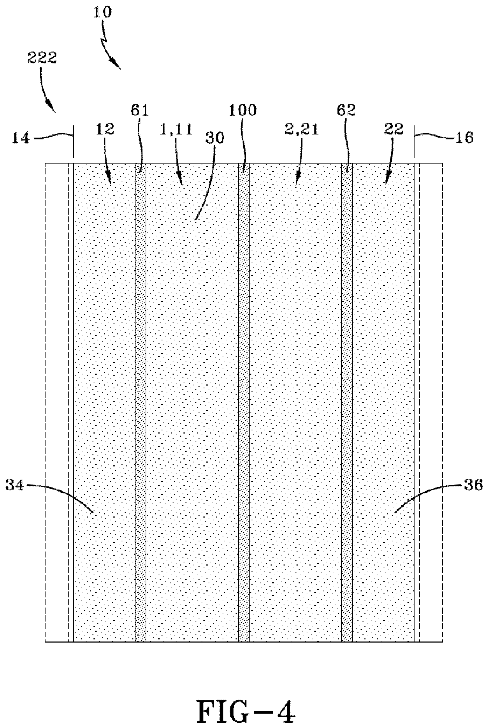

While the carcass 70 and other structures contribute much to the performance of the pneumatic tire 10, the example tread 222 of Fig. 1 may have two circumferentially continuous grooves 20, 24. Interposed between the two circumferentially continuous grooves may be a central rib 30 that extends continuously around the circumference of the tread 222. The central rib 30 may have a plurality of circumferentially spaced sipes 40 arranged in a first row 1 and a second row 2. The sipes 40 of the first row 1 may originate at the circumferentially continuous groove 20 and the sipes 40 of the second row 2 may originate at the circumferentially continuous groove 24 and both rows may extend axially inward and circumferentially (e.g., curved, inclined, etc.) to a circumferentially extending and continuous variable center groove 100. As shown in Figs. 2 and 3, the center groove 100 has a narrow opening at its radially outermost portion. As shown in Figs. 2 and 4, as the tire 10 wears, the opening widens as the radially outermost portion of the center groove 100 moves radially inward.

As shown in Figs. 1 through 4, the shoulders of the tread 222 adjacent each lateral tread edge 14, 16 may have first and second circumferentially extending shoulder ribs 34, 36. The first rib 34 may have a first set 11 of circumferentially spaced sipes 201 and a second set 12 of circumferentially spaced sipes 202. Each sipe 201 of the first set 11 may originate at the circumferentially continuous groove 20 and may extend axially and circumferentially (e.g., curved, inclined, etc.) across the first rib 34 to a circumferentially extending and continuous variable first groove 61, similar to the variable center groove 100. Each sipe 202 of the second set 12 may originate at the variable first groove 61 and may extend axially and circumferentially (e.g., curved, inclined, etc.) across the first rib 34 and may end prior to reaching the first lateral edge 14 of the tire 10.

The second rib 36 may have a first set 21 of circumferentially spaced sipes 301 and a second set 22 of circumferentially spaced sipes 302. Each sipe 301 of the first set 21 may originate at the circumferentially continuous groove 24 and may extend axially and circumferentially (e.g., curved, inclined, etc.) across the second rib 36 to a circumferentially extending and continuous variable second groove 62, similar to the variable center groove 100. Each sipe 302 of the second set 22 may originate at the variable second groove 62 and may extend axially and circumferentially (e.g., curved, inclined, etc.) across the second rib 36 and may end prior to reaching the second lateral edge 16 of the tire 10.

The example tire 10 may be utilized for highway and long haul truck applications. The example tire 10 and tread 222 may optimize treadwear, rolling resistance, and wet braking performance, thereby reducing fuel consumption and environmental impact. Nonskid, Tread Arc Radius, Net to Gross, density, depth, and orientation of the sipes have been considered in choosing the example tread 222. Compared with a similar conventional tire and tread, the example tire 10 and tread 222 may show a rolling resistance decrease of as much as 15 percent, while keeping same mileage potential and wet skid performance.

The circumferentially continuous grooves 20, 24 may have a 7.6 mm depth and the variable grooves 61, 62, 100 may have a 13.6 mm depth with the three variable grooves 61, 62, 100 widening as the tire 10 wears and the circumferentially continuous grooves 20, 24 ending (Fig. 4). The example shoulder ribs 34, 36 may provide less shoulder wear and increased robustness during maneuvering. The grooves 20, 24, 61, 62, 100 may have large radii at their bases for decreasing crack probability. The sipes 40, 201, 202, 301, 302 may have depths of 100 percent the depth of the grooves 20, 24 for improved wet skid performance and wear evenness. The mold shape may be tuned by finite element analysis for optimizing the shape of the footprint and balancing pressure distribution thereby smoothing the wear profile and maximizing mileage potential.

As stated above, the tire 10 and tread 222 in accordance with the present invention may provide excellent rolling resistance, wear, and traction characteristics. This tread 222 thus enhances the performance of the tire 10, even though the complexities of the structure and behavior of the pneumatic tire are such that no complete and satisfactory theory has been propounded.

## Claims

1. A tread for a pneumatic tire, the tread (222) comprising:
a first circumferentially continuous groove (20);
a second circumferentially continuous groove (24);
a central rib (30) interposed between said two circumferentially continuous grooves (20, 24), the central rib (30) extending continuously around a circumference of the tread (222);
a first circumferentially extending shoulder rib (34) disposed laterally outside of the first circumferentially continuous groove (20);
a second circumferentially extending shoulder rib (36) disposed laterally outside of the second circumferentially continuous groove (24);
the central rib (30) having a plurality of circumferentially spaced sipes (40) arranged in a first circumferential row (1) and a second circumferential row (2);
wherein the sipes (40) of the first row (1) extend between the first circumferentially continuous groove (20) and a circumferentially extending center groove (100);
wherein the sipes (40) of the second row (2) extend between the second circumferentially continuous groove (24) and the circumferentially extending center groove (100); and
wherein, as the tread (222) wears and a radially outermost portion or surface of the tread (222) moves radially inward, the circumferentially extending center groove (100) changes its width or opening between a minimum circumferentially extending axial width or opening and a maximum circumferentially extending axial width or opening;
**characterized in that** the width of the sipes (40) changes continuously or in at least two steps towards the circumferentially extending center groove (100) from a first, axially outer sipe width with respect to the circumferentially extending center groove (100) to a second, axially inner sipe width with respect to the circumferentially extending center groove (100), wherein the first sipe width is different from the second sipe width.

2. The tread of claim 1 wherein the sipes (40) of the first row (1) originate at the first circumferentially continuous groove (20) and/or the sipes (40) of the second row (2) originate at the second circumferentially continuous groove (2); and wherein the sipes (40) of both the first and second rows (1, 2) extend axially inward to and preferably end at the circumferentially extending center groove (100).

3. The tread of claim 1 or 2 wherein the first sipe width is larger such as at least two times larger than the second sipe width.

4. The tread of at least one of the previous claims wherein the center groove (100) has the minimum circumferentially extending axial width or opening at a radially outermost portion of the tread (222) when the tread is new and unworn.

5. The tread of at least one of the previous claims wherein center groove (100) has the maximum circumferentially extending axial width or opening when the tread (222) is 5 mm or more, alternatively 7 mm or more, worn.

6. The tread of at least one of the previous claims wherein width of the center groove (100) changes from the minimum circumferentially extending axial width or opening to the maximum circumferentially extending axial width or opening when the tread (222) is in a range of from 2 to 8 mm, preferably 2.5 to 6 mm, worn.

7. The tread of at least one of the previous claims wherein the minimum circumferentially extending axial width or opening is in a range of from 0.5 mm to 4 mm, preferably 1 mm to 2.5 mm, and the maximum circumferentially extending axial width or opening is in a range of from 2.5 to 8 mm, preferably 3 to 7 mm.

8. The tread of at least one of the previous claim further comprising a circumferentially extending first shoulder groove (61) disposed in the first shoulder rib (34), wherein as the tread (222) wears and a radially outermost portion or surface of the tread (222) moves radially inward, the circumferentially extending first shoulder groove (61) changes its width or opening between a minimum circumferentially extending axial width or opening and a maximum circumferentially extending axial width or opening, and wherein the design of the circumferentially extending first shoulder groove (61) preferably corresponds to the design of the circumferentially extending center groove (100) in terms of unworn groove width, radial depth and change of groove width with wear.

9. The tread of at least one of the previous claim further comprising a circumferentially extending second shoulder groove (62) disposed in the second shoulder rib (36), wherein as the tread (222) wears and a radially outermost portion or surface of the tread (222) moves radially inward, the circumferentially extending second shoulder groove (62) changes its width or opening between a minimum circumferentially extending axial width or opening and a maximum circumferentially extending axial width or opening, and wherein the design of the circumferentially extending second shoulder groove (62) preferably corresponds to the design of the circumferentially extending center groove (100) in terms of unworn groove width, radial depth and change of groove width with wear.

10. The tread of at least one of the previous claims wherein the tread (222) further comprises one, two or all of the following features:
(i) the first shoulder groove (61) has an axial width increasing from a surface of the first shoulder rib (34) radially inward toward an axis of rotation of the tire;
(ii) the second shoulder groove (62) has an axial width increasing from a surface of the first shoulder rib (36) radially inward toward an axis of rotation of the tire;
(iii) the center groove (100) has an axial width increasing from a surface of the center rib (30) radially inward toward an axis of rotation of the tire.

11. The tread of at least one of the previous claims wherein the radial depth of the first circumferentially continuous groove (20) and/or the radial depth of the second circumferentially continuous groove (24) is in a range of from 30 to 70 percent, preferably 40 to 60 percent, of the radial depth of the circumferentially extending center groove (100).

12. The tread of at least one of the previous claims wherein the axial width of the first circumferentially continuous groove (20) and/or the axial width of the second circumferentially continuous groove (24) is in a range of from 90 to 160 percent, preferably 110 to 140 percent, of the maximum axial width of the circumferentially extending center groove (100).

13. The tread of at least one of the previous claims wherein the first shoulder rib (34) has a first set (11) of circumferentially spaced sipes (201) and a second set (12) of circumferentially spaced sipes (202); and/or wherein the second shoulder rib (36) has a first set (21) of circumferentially spaced sipes (301) and a second set (22) of circumferentially spaced sipes (302).

14. The tread of claim 1 wherein
(i) the first and/or the second continous groove has a radial depth in a range of from 6.5 to 8.5 mm; and/or
(ii) the circumferentially continuous center grooves has a radial depth in a range of from 11 to 15 mm.

15. A pneumatic tire such as a radial truck tire comprising a tread (222) in accordance with at least one of the previous claims.

## Patentansprüche

1. Lauffläche für einen Luftreifen, wobei die Lauffläche (222) umfasst:
eine erste in Umfangsrichtung durchlaufende Rille (20);
eine zweite in Umfangsrichtung durchlaufende Rille (24);
eine zwischen den zwei in Umfangsrichtung durchlaufenden Rillen (20, 24) angeordnete Mittelrippe (30), wobei die Mittelrippe (30) sich durchlaufend um einen Umfang der Lauffläche (222) erstreckt;
eine erste sich in Umfangsrichtung erstreckende Schulterrippe (34), die in Seitenrichtung außerhalb der ersten in Umfangsrichtung durchlaufenden Rille (20) angeordnet ist;
eine zweite sich in Umfangsrichtung erstreckende Schulterrippe (36), die in Seitenrichtung außerhalb der zweiten in Umfangsrichtung durchlaufenden Rippe (24) angeordnet ist;
wobei die Mittelrippe (30) eine Vielzahl von in Umfangsrichtung beabstandeten Feineinschnitten (40) aufweist, die in einer ersten umfangsgerichteten Reihe (1) und einer zweiten umfangsgerichteten Reihe (2) angeordnet sind;
wobei die Feineinschnitte (40) der ersten Reihe (1) sich zwischen der ersten in Umfangsrichtung durchlaufenden Rille (20) und einer sich in Umfangsrichtung erstreckenden Mittelrille (100) erstrecken;
wobei die Feineinschnitte (40) der zweiten Reihe (2) sich zwischen der zweiten in Umfangsrichtung durchlaufenden Rille (24) und der sich in Umfangsrichtung erstreckenden Mittelrille (100) erstrecken; und
wobei, wenn die Lauffläche (222) sich abnutzt und ein radial äußerster Teil oder Oberfläche der Lauffläche (222) sich radial einwärts bewegt, die sich in Umfangsrichtung erstreckende Mittelrille (100) ihre Breite oder Öffnung zwischen einer minimalen sich in Umfangsrichtung erstreckenden axialen Breite oder Öffnung und einer maximalen sich in Umfangsrichtung erstreckenden axialen Breite oder Öffnung ändert;
**dadurch gekennzeichnet, dass** die Breite der Feineinschnitte (40) sich kontinuierlich oder in mindestens zwei Schritten zu der sich in Umfangsrichtung erstreckenden Mittelrille (100) ändert, von einer ersten, axial äußeren Feineinschnittbreite in Bezug zu der sich in Umfangsrichtung erstreckenden Mittelrille (100) zu einer zweiten, axial inneren Feineinschnittbreite in Bezug zu der sich in Umfangsrichtung erstreckenden Mittelrille (100), wobei die erste Feineinschnittbreite von der zweiten Feineinschnittbreite verschieden ist.

2. Lauffläche nach Anspruch 1, wobei die Feineinschnitte (40) der ersten Reihe (1) von der ersten in Umfangsrichtung durchlaufenden Rille (20) ausgehen und/oder die Feineinschnitte (40) der zweiten Reihe (2) von der zweiten in Umfangsrichtung durchlaufenden Rille (2) ausgehen; und wobei die Feineinschnitte (40) sowohl der ersten als auch der zweiten Reihe (1, 2) sich axial einwärts zu der sich in Umfangsrichtung erstreckenden Mittelrille (100) erstrecken und bevorzugt an dieser enden.

3. Lauffläche nach Anspruch 1 oder 2, wobei die erste Feineinschnittbreite größer, wie etwa mindestens zweimal größer, als die zweite Feineinschnittbreite ist.

4. Lauffläche nach mindestens einem der vorhergehenden Ansprüche, wobei die Mittelrille (100) die minimale sich in Umfangsrichtung erstreckende axiale Breite oder Öffnung an einem radial äußersten Teil der Lauffläche (222) aufweist, wenn die Lauffläche neu und unabgenutzt ist.

5. Lauffläche nach mindestens einem der vorhergehenden Ansprüche, wobei die Mittelrille (100) die maximale sich in Umfangsrichtung erstreckende axiale Breite oder Öffnung aufweist, wenn die Lauffläche (222) 5 mm oder mehr, alternativ 7 mm oder mehr, abgenutzt ist.

6. Lauffläche nach mindestens einem der vorhergehenden Ansprüche, wobei sich die Breite der Mittelrille (100) von der minimalen sich in Umfangsrichtung erstreckenden axialen Breite oder Öffnung zu der maximalen sich in Umfangsrichtung erstreckenden axialen Breite oder Öffnung ändert, wenn die Lauffläche (222) im Bereich von 2 bis 8 mm, bevorzugt 2,5 bis 6 mm, abgenutzt ist.

7. Lauffläche nach mindestens einem der vorhergehenden Ansprüche, wobei die minimale sich in Umfangsrichtung erstreckende axiale Breite oder Öffnung im Bereich von 0,5 mm bis 4 mm, bevorzugt 1 mm bis 2,5 mm, liegt und die maximale sich in Umfangsrichtung erstreckende axiale Breite oder Öffnung im Bereich von 2,5 bis 8 mm, bevorzugt 3 bis 7 mm, liegt.

8. Lauffläche nach mindestens einem der vorhergehenden Ansprüche, weiter eine sich in Umfangsrichtung erstreckende erste Schulterrille (61) umfassend, die in der ersten Schulterrippe (34) angeordnet ist, wobei, wenn sich die Lauffläche (222) abnutzt und ein radial äußerster Teil oder Oberfläche der Lauffläche (222) sich radial einwärts bewegt, die sich in Umfangsrichtung erstreckende erste Schulterrille (61) ihre Breite oder Öffnung zwischen einer minimalen sich in Umfangsrichtung erstreckenden axialen Breite oder Öffnung und einer maximalen sich in Umfangsrichtung erstreckenden axialen Breite oder Öffnung ändert, und wobei die Gestaltung der sich in Umfangsrichtung erstreckenden ersten Schulterrille (61) bevorzugt der Gestaltung der sich in Umfangsrichtung erstreckenden Mittelrille (100), in Begriffen von unabgenutzter Rillenbreite, radialer Tiefe und Änderung der Rillenbreite bei Abnutzung, entspricht.

9. Lauffläche nach mindestens einem der vorhergehenden Ansprüche, weiter eine sich in Umfangsrichtung erstreckende zweite Schulterrille (62) umfassend, die in der zweiten Schulterrippe (36) angeordnet ist, wobei, wenn sich die Lauffläche (222) abnutzt und ein radial äußerster Teil oder Oberfläche der Lauffläche (222) sich radial einwärts bewegt, die sich in Umfangsrichtung erstreckende zweite Schulterrille (62) ihre Breite oder Öffnung zwischen einer minimalen sich in Umfangsrichtung erstreckenden axialen Breite oder Öffnung und einer maximalen sich in Umfangsrichtung erstreckenden axialen Breite oder Öffnung ändert, und wobei die Gestaltung der sich in Umfangsrichtung erstreckenden zweiten Schulterrille (62) bevorzugt der Gestaltung der sich in Umfangsrichtung erstreckenden Mittelrille (100), in Begriffen von unabgenutzter Rillenbreite, radialer Tiefe und Änderung der Rillenbreite bei Abnutzung, entspricht.

10. Lauffläche nach mindestens einem der vorhergehenden Ansprüche, wobei die Lauffläche (222) weiter eine, zwei oder alle der folgenden Eigenschaften aufweist:
(i) die erste Schulterrille (61) weist eine axiale Breite auf, die von einer Oberfläche der ersten Schulterrippe (34) radial einwärts zu einer Rotationsachse des Reifens zunimmt;
(ii) die zweite Schulterrille (62) weist eine axiale Breite auf, die von einer Oberfläche der ersten Schulterrippe (36) radial einwärts zu einer Rotationsachse des Reifens zunimmt;
(iii) die Mittelrille (100) weist eine axiale Breite auf, die von einer Oberfläche der Mittelrippe (30) radial einwärts zu einer Rotationsachse des Reifens zunimmt.

11. Lauffläche nach mindestens einem der vorhergehenden Ansprüche, wobei die radiale Tiefe der ersten in Umfangsrichtung durchlaufenden Rille (20) und/oder die radiale Tiefe der zweiten in Umfangsrichtung durchlaufenden Rille (24) im Bereich von 30 bis 70 Prozent, bevorzugt 40 bis 60 Prozent, der radialen Tiefe der sich in Umfangsrichtung erstreckenden Mittelrille (100) liegt.

12. Lauffläche nach mindestens einem der vorhergehenden Ansprüche, wobei die axiale Breite der ersten in Umfangsrichtung durchlaufenden Rille (20) und/oder die axiale Breite der zweiten in Umfangsrichtung durchlaufenden Rille (24) im Bereich von 90 bis 160 Prozent, bevorzugt 110 bis 140 Prozent, der maximalen axialen Breite der sich in Umfangsrichtung erstreckenden Mittelrille (100) liegt.

13. Lauffläche nach mindestens einem der vorhergehenden Ansprüche, wobei die erste Schulterrippe (34) einen ersten Satz (11) von in Umfangsrichtung beabstandeten Feineinschnitten (201) und einen zweiten Satz (12) von in Umfangsrichtung beabstandeten Feineinschnitten (202) aufweist; und/oder wobei die zweite Schulterrippe (36) einen ersten Satz (21) von in Umfangsrichtung beabstandeten Feineinschnitten (301) und einen zweiten Satz (22) von in Umfangsrichtung beabstandeten Feineinschnitten (302) aufweist.

14. Lauffläche nach Anspruch 1, wobei
(i) die erste und/oder die zweite durchlaufende Rille eine radiale Tiefe im Bereich von 6,5 bis 8,5 mm aufweist; und/oder
(ii) die in Umfangsrichtung durchlaufende Mittelrille eine radiale Tiefe im Bereich von 11 bis 15 mm aufweist.

15. Luftreifen, wie etwa ein Lastkraftwagen-Radialreifen, umfassend eine Lauffläche (222) nach mindestens einem der vorhergehenden Ansprüche.

## Revendications

1. Bande de roulement pour bandage pneumatique, la bande de roulement (222) comprenant :
une première rainure (20) continue en direction circonférentielle ;
une deuxième rainure (24) continue en direction circonférentielle ;
une nervure centrale (30) intercalée entre lesdites deux rainures (20, 24) continues en direction circonférentielle, la nervure centrale (30) s'étendant en continu autour d'une circonférence de la bande de roulement (222) ;
une première nervure d'épaulement (34) s'étendant en direction circonférentielle, disposée en position latérale à l'extérieur de la première rainure (20) continue en direction circonférentielle ;
une deuxième nervure d'épaulement (36) s'étendant en direction circonférentielle, disposée en position latérale à l'extérieur de la deuxième rainure (24) continue en direction circonférentielle ;
la nervure centrale (30) possédant plusieurs lamelles (40) espacées en direction circonférentielle, agencées en une première rangée circonférentielle (1) et en une deuxième rangée circonférentielle (2) ;
dans laquelle les lamelles (40) de la première rangée (1) s'étendent entre la première rainure (20) continue en direction circonférentielle et une rainure centrale (100) s'étendant en direction circonférentielle ;
dans laquelle les lamelles (40) de la deuxième rangée (2) s'étendent entre la deuxième rainure (24) continue en direction circonférentielle et la rainure centrale (100) s'étendant en direction circonférentielle ;
dans laquelle, au fur et à mesure que la bande de roulement (222) s'use et que la portion la plus externe en direction radiale ou la surface de la bande de roulement (222) se déplace en direction radiale vers l'intérieur, la largeur ou l'ouverture de la rainure centrale (100) s'étendant en direction circonférentielle subit un changement pour passer d'une largeur ou d'une ouverture axiale minimale s'étendant en direction circonférentielle à une largeur ou à une ouverture axiale maximale s'étendant en direction circonférentielle ;
**caractérisée en ce que** la largeur des lamelles (40) subit un changement en continu ou en au moins deux étapes dans la direction de la rainure centrale (100) à partir d'une première largeur de lamelle externe en direction axiale par rapport à la rainure centrale (100) s'étendant en direction circonférentielle jusqu'à une deuxième largeur de lamelle interne en direction axiale par rapport à la rainure centrale (100) s'étendant en direction circonférentielle, dans lequel la première largeur de lamelle est différente de la deuxième largeur de lamelle.

2. Bande de roulement selon la revendication 1, dans laquelle les lamelles (40) de la première rangée (1) démarrent à la première rainure (20) continue en direction circonférentielle et/ou les lamelles (40) de la deuxième rangée (2) démarrent à la deuxième rainure (24) continue en direction circonférentielle ; et dans laquelle les lamelles (40) à la fois de la première et de la deuxième rangée (1, 2) s'étendent en direction axiale vers l'intérieur jusqu'à la rainure centrale (100) s'étendant en direction circonférentielle, et de préférence se terminent à ladite rainure.

3. Bande de roulement selon la revendication 1 ou 2, dans laquelle la première largeur de lamelle est supérieure, par exemple au moins deux fois supérieure la deuxième largeur de lamelle.

4. Bande de roulement selon au moins une des revendications précédentes, dans laquelle la rainure centrale (100) possède sa largeur ou son ouverture axiale minimale s'étendant en direction circonférentielle à une portion la plus externe en direction radiale de la bande de roulement (222) lorsque la bande de roulement est nouvelle et non usée.

5. Bande de roulement selon au moins une des revendications précédentes, dans laquelle la rainure centrale (100) possède sa largeur ou son ouverture axiale maximale s'étendant en direction circonférentielle lorsque la bande de roulement (222) est usée à concurrence de 5 mm ou plus, en variante à concurrence de 7 mm ou plus.

6. Bande de roulement selon au moins une des revendications précédentes, dans laquelle la largeur de la rainure centrale (100) subit un changement pour passer de la largeur ou de l'ouverture axiale minimale s'étendant en direction circonférentielle à la largeur ou à l'ouverture axiale maximale s'étendant en direction circonférentielle lorsque la bande de roulement (222) manifeste une usure dans la plage de 2 à 8 mm, de préférence de 2,5 à 6 mm.

7. Bande de roulement selon au moins une des revendications précédentes, dans laquelle la largeur ou l'ouverture axiale minimale s'étendant en direction circonférentielle se situe dans la plage de 0,5 mm à 4 mm, de préférence de 1 mm à 2,5 mm, et la largeur ou l'ouverture axiale maximale s'étendant en direction circonférentielle se situe dans la plage de 2,5 mm à 8 mm, de préférence de 3 mm à 7 mm.

8. Bande de roulement selon au moins une des revendications précédentes, comprenant en outre une première rainure d'épaulement (61) s'étendant en direction circonférentielle, disposée dans la première nervure d'épaulement (34) ; dans laquelle lorsque la bande de roulement (222) s'use et une portion ou une surface de la bande de roulement (222) la plus externe en direction radiale se déplace vers l'intérieur en direction radiale, la largeur ou l'ouverture de la première rainure d'épaulement (61) s'étendant en direction circonférentielle subit un changement pour passer d'une largeur ou d'une ouverture axiale minimale s'étendant en direction circonférentielle à une largeur ou à une ouverture axiale maximale s'étendant en direction circonférentielle ; et dans laquelle le motif de la première rainure d'épaulement (61) s'étendant en direction circonférentielle correspond de préférence au motif de la rainure centrale (100) s'étendant en direction circonférentielle en termes de la largeur de la rainure à l'état non usé, en termes de la profondeur radiale et en termes de changement de la largeur de la rainure en fonction de l'usure.

9. Bande de roulement selon au moins une des revendications précédentes, comprenant en outre une deuxième rainure d'épaulement (62) s'étendant en direction circonférentielle, disposée dans la deuxième nervure d'épaulement (36) ; dans laquelle lorsque la bande de roulement (222) s'use et une portion ou une surface de la bande de roulement (222) la plus externe en direction radiale se déplace vers l'intérieur en direction radiale, la largeur ou l'ouverture de la deuxième rainure d'épaulement (62) s'étendant en direction circonférentielle subit un changement pour passer d'une largeur ou d'une ouverture axiale minimale s'étendant en direction circonférentielle à une largeur ou à une ouverture axiale maximale s'étendant en direction circonférentielle ; et dans laquelle le motif de la deuxième rainure d'épaulement (62) s'étendant en direction circonférentielle correspond de préférence au motif de la rainure centrale (100) s'étendant en direction circonférentielle en termes de la largeur de la rainure à l'état non usé, en termes de la profondeur radiale et en termes de changement de la largeur de la rainure en fonction de l'usure.

10. Bande de roulement selon au moins une des revendications précédentes, dans laquelle la bande de roulement (222) comprend en outre une des caractéristiques, deux des caractéristiques ou la totalité des caractéristiques reprises ci-dessous :
(i) la première rainure d'épaulement (61) possède une largeur axiale qui augmente à partir d'une surface de la première nervure d'épaulement (34) en direction radiale vers l'intérieur dans la direction de l'axe de rotation du bandage pneumatique ;
(ii) la deuxième rainure d'épaulement (62) possède une largeur axiale qui augmente à partir d'une surface de la deuxième nervure d'épaulement (36) en direction radiale vers l'intérieur dans la direction de l'axe de rotation du bandage pneumatique ;
(iii) la rainure centrale (100) possède une largeur axiale qui augmente à partir d'une surface de la nervure centrale (30) en direction radiale vers l'intérieur dans la direction de l'axe de rotation du bandage pneumatique.

11. Bande de roulement selon au moins une des revendications précédentes, dans laquelle la profondeur radiale de la première rainure (20) continue en direction circonférentielle et la profondeur radiale de la deuxième rainure (24) continue en direction circonférentielle se situe dans la plage de 30 à 70 %, de préférence dans la plage de 40 à 60 %, de la profondeur radiale de la rainure centrale (100) s'étendant en direction circonférentielle.

12. Bande de roulement selon au moins une des revendications précédentes, dans laquelle la largeur axiale de la première rainure (20) continue en direction circonférentielle et/ou la largeur axiale de la deuxième rainure (24) continue en direction circonférentielle se situe dans la plage de 90 à 160 %, de préférence de 110 à 140 % de la largeur axiale maximale de la rainure centrale (100) s'étendant en direction circonférentielle.

13. Bande de roulement selon au moins une des revendications précédentes, dans laquelle la première nervure d'épaulement (34) possède un premier jeu (11) de lamelles (201) espacées en direction circonférentielle et un deuxième jeu (12) de lamelles (202) espacées en direction circonférentielle ; et/ou dans laquelle la deuxième nervure d'épaulement (36) possède un premier jeu (21) de lamelles (301) espacées en direction circonférentielle et un deuxième jeu (22) de lamelles (302) espacées en direction circonférentielle.

14. Bande de roulement selon la revendication 1, dans laquelle :
(i) la première et/ou la deuxième rainure continue possèdent une profondeur radiale qui se situe dans la plage de 6,5 à 8,5 mm ; et/ou
(ii) la rainure centrale continue en direction circonférentielle possède une profondeur radiale qui se situe dans la plage de 11 à 15 mm.

15. Bandage pneumatique, tel qu'un bandage pneumatique pour camion du type à nappe radiale, comprenant une bande de roulement (222) conformément à au moins une des revendications précédentes.
